# NEUE EUROPÄISCHE PATENTSCHRIFT

(11) **EP 1 661 693 B2**
(45) Veröffentlichungstag und Bekanntmachung des Hinweises auf die Entscheidung über den Einspruch: **07.03.2012**
(45) Hinweis auf die Patenterteilung: 23.01.2008
(21) Anmeldenummer: 05024887.1
(22) Anmeldetag: 15.11.2005
(51) Int. Cl.: B32B 27/32, B65D 65/40

(54) **Dreheinschlagfolie sowie deren Verwendung als Verpackungsfolie**
Twist-wrapping film and its use as packaging film
Feuille d'emballage fermee par torsion, et son utilisation comme feuille d'emballage

(30) Priorität: 29.11.2004 AT 20012004
(43) Veröffentlichungstag der Anmeldung: 31.05.2006
(73) Patentinhaber: Constantia Ebert GmbH, 65201 Wiesbaden (DE)
(72) Erfinder: Lohr, Waldemar, 65199 Wiesbaden (DE)
(74) Vertreter: Dungler, Karin

(56) Entgegenhaltungen:
- EP-A- 0 773 102
- EP-A- 0 968 816
- EP-A1- 0 773 102
- EP-A2- 0 920 989
- EP-A2- 0 968 816
- WO-A-2004/098882
- WO-A1-2004/098882
- DE-A1- 10 238 516
- DE-A1- 10 238 516
- JP-A- 10 166 529
- JP-A- 10 238 516
- US-A1- 2004 157 516
- US-A1- 2004 157 516

## Beschreibung

Die Erfindung betrifft die Verwendung einer mehrlagigen, durch Coextrusion mehrerer Kunststofflagen hergestellten Kunststofffolie als Verpackungsfolie für Dreheinschlagverpackungen.

Es ist bekannt, zum Verpacken von Süßwaren, wie Bonbons, aber auch Konditoreiwaren, sogenannte Dreheinschlagfolien zu verwenden, wobei diese ein gutes Deadfold, d.h. geringes Rückstellvermögen, gute Steifigkeit sowie Transparenz aufweisen sollen. Diese Dreheinschlagfolien werden für Dreheinschlagverpackungen (Twistverpackungen) eingesetzt, wobei der Abpackprozess derart erfolgt, dass die Dreheinschlagfolie um das zu verpackende Gut herumgeschlagen wird, dieses in Schlauchform seitlich abgelängt wird, und anschließend die Seitenenden gedreht werden, sodass das Packungsgut gegen Verunreinigungen geschützt ist.

Eine für den Dreheinschlag geeignete Verpackungsfolie besteht beispielsweise aus Cellophan. Dieses zeichnet sich durch Transparenz sowie hohe Steifigkeit aus. Jedoch ist dessen Herstellung oftmals kostspielig und kompliziert.

Alternativen dazu wurden bei der Bereitstellung von Polypropylenfolien gefunden; allerdings wiesen diese ein unzufriedenstellendes Deadfold-Verhalten auf. Dies bedeutet, dass die Packungsenden, also die getwisteten Enden dazu neigen, in ihre ursprüngliche Form zurückzuklappen.

Man ist in der Folge dazu übergegangen, geeignete zusatzstoffe aufzufinden, welche das Rückstellverhalten der Dreheinschlagpackung verbessern sollen. Dabei wurden die Eigenschaften sogenannter Cycloolefincopolymere COC untersucht, welche beispielsweise durch Polymerisieren von Ethylen mit Norboran unter Zuhilfenahme metallischer Katalysatoren hergestellt werden. Bislang war es bekannt, dass diese COC-Polymere zufriedenstellende Barriereeigenschaften gegenüber Wasser zeigen. Diese Eigenschaft wurde insbesondere bei der Herstellung von Deckelfolien für Blisterpackungen ausgenützt, da mit Hilfe von Blisterpackungen feuchtigkeitsempfindliches Packungsgut verschlossen werden soll, siehe beispielsweise WO-2004/098882, EP-A-968 816 sowie DE-A-102 38 516.

Gemäß US 2004/0157516 können auf Grund der hohen Barrierewirkung von COC-Polymeren gegen Eindringen von Feuchtigkeit sogar Feuchtigkeit absorbierende faserhältige Papiere derart wasserabstoßend ausgestattet werden, dass sie in Form von Kartons für feuchtigkeitsempfindliches Packungsgut eingesetzt werden können.

Ein Ansatz zur Verwendung von COC-Polymeren für die Herstellung von Dreheinschlagverpackungen findet sich weiters in der EP-A-773 102; jedoch ist dieser Lehre kein Hinweis zu entnehmen, inwieweit der Zusatz von COC-Polymeren einen etwaigen Einfluss auf das Rückstellverhalten der Dreheinschlagpackung hat.

Da COC-Polymere steifer als ansich bekanntes niedrig dichtes Polyethylen (LDPE) ist, konnte durch die Verwendung von Polymer-Blends, bestehend aus Cycloolefincopolymeren und Polyethylen oder Polypropylen die Steifigkeit ansich bekannter Twistverpackungsmaterialien erhöht werden.
Beim Verpackungsforum am 7. und 8. Oktober 2003 in Nürnberg, siehe VDI-Berichte 1719, wurden Dreheinschlagfolien mit symmetrischer A-B-A Struktur präsentiert, wobei COC in den Außenschichten und LDPE- oder PP-Materialien im Kern vorgeschlagen wurden.

Diesbezügliche Lösungsansätze sind in der EP-A- 920 989, der DE-A1-195 36 043 sowie in der JP-A-11077924 offenbart. Eine weitere Möglichkeit die Steifigkeit der Materialien für Twistverpackungen zu erhöhen, wurde gemäß der JP-A-10166529 dahingehend ausgenützt, dass zwischen einer Polypropylenfolie und einer Folie aus Cycloolefincopolymeren eine Haftvermittlerschicht vorgesehen ist. Obzwar die für Twistverpackungsmaterialien gewünschte Steifigkeit durch Bereitstellen von COC-Blends bzw. durch Haftvermittler offenbar erhöht werden konnte, sind diese Maßnahmen einerseits durch die präzise Angabe der Mischungsverhältnisse in den Polymer-Blends sowie anderseits durch Verwendung einer zusätzlichen Zwischenschicht in Form eines Haftvermittlers bei der Herstellung von Dreheinschlagsfolien (Twistverpackungsmaterialien) relativ aufwändig.

Hier will die Erfindung Abhilfe schaffen.

Erfindungsgemäß wird die verwendung einer mehrlagigen, durch Coextrusion hergestellten Kunststoffolie bestehend aus
a) einer Kunststofflage 4 aus in seinem Aufbau einheitlichem teilkristallinen Polyolefin und
b) an diese an beiden Seiten jeweils unmittelbar angrenzenden, in ihrem Aufbau einheitlichen Kunststoffflagen 5 aus amorphen Cycloolefincopolymer, wobei die Kunststofflagen a) und b) in direktem Kontakt miteinander stehen, mit der Maßgabe, dass an die Lagen 5 jeweils unmittelbar zumindest eine weitere Lage 6 aus in seinem Aufbau einheitlichem teilkristallinen Polyolefin angrenzt, als Verpackungsfolie für Dreheinschlagverpackungen vorgeschlagen.

Weitere Ausgestaltungen der erfindungsgemäßen Verwendung sind gemäß Unteransprüche offenbart.

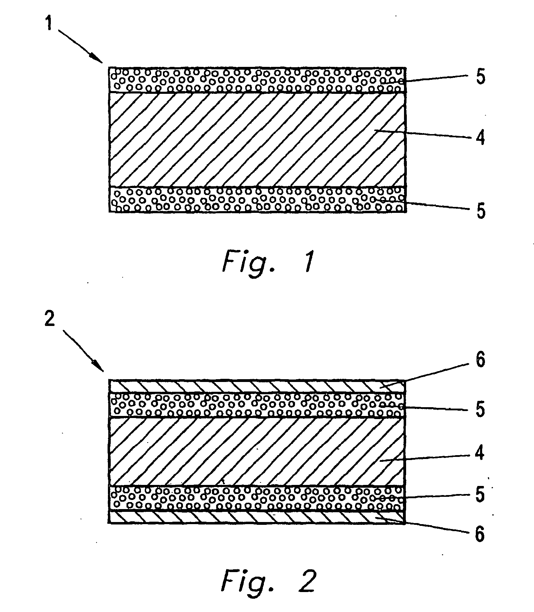

Die Erfindung wird im Folgenden an Hand der Figuren 1 und 2 sowie an Hand eines Ausführungsbeispiele näher erläutert. Dabei zeigt Fig. 1 eine bekannte Ausführungsform für die Verwendung einer mehrlagigen Kunststofffolie auf Basis einer Dreilagenstruktur 1, wogegen Fig. 2 die erfindungsgemäße Verwendung einer mehrlagigen Kunststoffolie auf Basis einer Fünflagenstruktur 2 zeigt.

Die für die erfindungsgemäße Verwendung notwendige Kunststofffolie, wie sie beispielsweise gemäß Fig. 2 gezeigt wird, kann nunmehr wie folgt hergestellt werden.

### Beispiel:

Auf einer Blasfolien- oder Castfolienanlage wird die Dreheinschlagfolie 1, wie in Fig. 1 gezeigt, derart hergestellt, dass durch Coextrusion auf eine innere Schicht 4 aus Polyolefin beidseitig amorphe Schichten 5 aus Cycloolefincopolymeren aufgebracht werden. Dabei werden die Verfahrensparameter derart eingestellt, dass in der gebildeten Dreilagenstruktur das Cycloolefincopolymer in einem amorphen, das eingesetzte Polyolefin im teilkristallinen Zustand verbleibt.

Durch Einstellen der Maschinenparameter in der Coextrusionsanlage werden auf die Dreilagenstruktur gemäß Fig. 1 zusätzliche Polyolefinschichten 6 beidseitig aufgebracht werden, sodass die Dreheinschlagfolie 2, wie in Fig. 2 gezeigt, in Form einer Fünflagenstruktur erzeugt wird.

Als Polyolefin werden Polypropylen (PP) sowie Polyethylen (PE) eingesetzt. Durch weitere Auswahl der Monomere in der Molekülkette beispielsweise in Form von homo-PP, random-PP sowie LLDPE können zusätzliche Eigenschaften, wie Steifigkeit und Deadfold-Verhalten eingestellt werden.

## Patentansprüche

1. Verwendung einer mehrlagigen, durch Coextrusion hergestellten Kunststofffolie bestehend aus
a) einer Kunststoffläge (4) aus in seinem Aufbau einheitlichen, teilkristallinen Polyolefin und
b) an diese an beiden Seiten jeweils unmittelbar angrenzenden, in ihrem Aufbau einheitlichen Kunststofflagen (5) aus amorphem Cycloolefincopolymer, wobei die Kunststofflagen a) und b) in direktem Kontakt miteinander stehen, mit der Maßgabe, dass an die Lagen (5) jeweils unmittelbar zumindest eine weitere Lage (6) aus einem in seinem Aufbau einheitlichen, teilkristallinen Polyolefin angrenzt, als Verpackungsfolie für Dreheinschlagverpackungen.

2. Verwendung nach Anspruch 1 mit der Maßgabe, dass als Polyolefine Polypropylen oder Polyethylen, vorzugsweise in Form von homo-PP, random-PP oder LLDPE eingesetzt wird.

3. Verwendung nach Anspruch 1 oder 2 mit der Maßgabe, dass die Kunststoffolie zusätzlich zumindest eine Deckschicht, vorzugsweise in Form eines Aufdrucks und/oder einer Metallisierung aufweist.

## Claims

1. Use of a multilayer plastic material film produced by coextrusion comprising
a) a plastic material layer (4) made of polyolefin which is uniform in its structure and partially crystalline, and
b) plastic material layers (5) which are uniform in their structure, are made of amorphous cycloolefin copolymer and abut directly on said plastic material layer (4) on both sides respectively, the plastic material layers a) and b) being in direct contact with each other, with the proviso that, on the layers (5) respectively, there abuts directly at least one further layer (6) which is uniform in its structure and partially crystalline, as packaging film for twist-wrapping packagings.

2. Use according to claim 1, with the proviso that polypropylene or polyethylene, preferably in the form of homo PP, random PP or LLDPE, is used as polyolefins.

3. Use according to claim 1 or 2, with the proviso that the plastic material film has in addition at least one cover layer, preferably in the form of an imprint and/or a metallisation.

## Revendications

1. Utilisation d'une feuille en matière plastique à plusieurs couches fabriquée par coextrusion constituée de
a) une couche de matière plastique (4) constituée de polyoléfine(s) partiellement cristalline(s) de structure homogène et
b) des couches de matière plastique de structure homogène (5) constituées d'un copolymère de cyclooléfine amorphe, chacune directement adjacente à celle-ci des deux côtés, les couches de matière plastique a) et b) étant en contact direct les unes avec les autres, **caractérisée en ce qu'**au moins une autre couche supplémentaire (6) constituée d'une polyoléfine partiellement cristalline de structure homogène est directement adjacente aux couches (5), sous forme de feuille d'emballage pour des emballages rotatifs.

2. Utilisation selon la revendication 1, **caractérisée en ce que** les polyoléfines utilisées sont du polypropylène ou du polyéthylène, de préférence sous forme d'homo-PP, de random-PP ou de LLDPE.

3. Utilisation selon la revendication 1 ou 2, **caractérisée en ce que** la feuille de matière plastique comporte, en plus, au moins une couche de couverture, de préférence sous forme d'une impression en surcharge et/ou d'une métallisation.
